# EUROPEAN PATENT SPECIFICATION

(11) **EP 0 983 212 B1**
(45) Date of publication and mention of the grant of the patent: **13.02.2002**
(21) Application number: 98930673.3
(22) Date of filing: 05.05.1998
(51) Int. Cl.: C04B 24/16, C04B 103/30

(54) **CEMENT FLUIDIFIERS HAVING STARCH SULPHATE BASE**
VERFLÜSSIGUNGSMITTEL FÜR ZEMENT AUF STÄRKESULFATBASIS
FLUIDIFIANTS DE CIMENT POSSEDANT UNE BASE DE SULFATE D'AMIDON

(30) Priority: 06.05.1997 IT MI971044
(43) Date of publication of application: 08.03.2000
(73) Proprietor: F.B.C. Future Biologic Chemicals S.R.L., 34112 Trieste (IT)
(72) Inventor: NAVARINI, Luciano, I-34133 Trieste (IT); STUCCHI, Luca, I-33048 S. Giovanni al Natisone (IT)
(74) Representative: Coggi, Giorgio
(86) International application number: EP9802651
(87) International publication number: WO9850320

(56) References cited:
- EP-A- 0 554 751
- EP-A- 0 573 852
- DE-A- 4 407 499
- GB-A- 2 138 014

## Description

### State of the art

Cementitious compositions are frequently formulated with additives in order to modify their various properties, such as rheological behaviour, setting time, compressive strength, resistance to environmental factors, etc.

Among the cement additives commonly used, it is possible to cite accelerators, water reducers, fluidifiers, retarders, antifoaming agents, etc.

Fluidifiers make it possible to obtain cementitious mixtures having good workability using a reduced amount of water. Some compounds, referred to as superfluidifiers, present an additional effect of fluidification plus reduction of water content.

The distinction between fluidifying effect and superfluidifying effect is based upon the calculation of the quantity of water necessary for forming standard plastic mortars. For instance, according to the Italian standards for the analysis of materials (UNI), an additive is considered to be a superfluidifier if it enables a water reduction of at least 10% compared to the amount of water necessary without additive.

Various cement fluidifiers and superfluidifiers are known in the state of the art. Examples thereof are polymers of naphthalene condensed with isocyanuric acid and sulphonic acid, pelletted products containing anhydrides or unsaturated bicarboxylic acids, polymers with bases of styrene and maleic acid condensed with naphthalene formaldehyde, copolymers of methacrylate esters or maieic anhydride, products containing β-naphthalene sulphonate condensed with formaldehyde, etc. (II cemento, 1/1993, pp. 11-24).

Many known fluidifiers present the disadvantage of having to be produced from compounds possessing considerable aggressiveness, or of requiring complex processing procedures, such as pelletization or copolymerization. These factors entail a big environmental impact and weigh heavily upon the cost of production of the additive.

Given the particular nature of cement, which is a product used in very large quantities and which has an extremely low cost/quantity ratio, it becomes essential to have available additives that are easy to procure, effective, and very cheap, so as to maintain the cost of the modified cement commercially competitive.

Different studies have been undertaken to obtain cement fluidifiers from widely available sources that are environmentally compatible and of simpler preparation. Some of these studies are based upon the behaviour of polysaccharide sulphates. In the patent No. US-5573589, polysaccharide sulphate-based cementitious compositions are described. According to this patent, any sulphated derivatives of dextran, starch, natural gum, curdlan, and cellulose have a fluidifying effect.

In the patent No. US-A-2896715, starch sulphate is used in cementitious compositions as an agent for retarding setting and for obtaining "fluid mixtures".

It is known that, for each polysaccharide sulphate, there exists a wide range of derivatives presenting different degrees of substitution and different molecular weights. However, the prior art analyzed does not devote attention to the problem of the fluidifying effectiveness in relation to molecular weight and degree of substitution; on the contrary, both the documents cited assume the effectiveness of the polysaccharides considered irrespective of these factors.

Another important aspect in cementitious compositions concerns their behaviour with regard to entrapping of air in the fluid state, which in turn reflects upon the mechanical characteristics of the end product (concrete).

Concretes obtained from mortars with reduced entrapping of air have low porosity and present a lower absorption of water or moisture, with a consequent lower degradation over time. The lower porosity moreover guarantees a greater mechanical strength of the concrete. These characteristics are particularly appreciated for cements that are likely to undergo high mechanical stresses and/or are used in environments where there is presence of water or considerable moisture.

The compositions tested in patent No. US-A-5573589 are found to entrain air at a level similar to that of compositions containing known fluidifiers, such as β-naphthalene sulphonate condensed with formaldehyde. This level is, however, higher than the amounts of air entraining by non-fluidified standard mortars.

Considering the state of the art analyzed, the problem still remains of obtaining new effective cement fluidifiers. There likewise remains the problem of obtaining fluidifiers that can cause a lower entrapping of air in cementitious mixtures in the fluid state.

### Field of the invention

The present invention regards the field of fluidifying and superfluidifying cement additives.

In the light of the state of the art, the present invention tackles the problem of obtaining new cement fluidifiers of proven effectiveness. A further problem addressed is that of obtaining products that cause an entrapping of air, in fluid mixtures, lower than the one given by the known fluidifiers.

### Summary

Described herein is a cement additive with high fluidifying activity and reduced trapping of air in the fluid mixture, consisting of starch sulphate, its hydrolysed derivatives, or their salts, where the starch sulphate has a sulphur content of between 6% and 12% and a molecular weight of between 3,000 and 50,000. Also described are cementitious compositions having high fluidity and reduced entrapping of air, in the fluid state, containing said starch sulphate, and their process of preparation. A process is moreover described for increasing the fluidity and/or reducing the entrapping of air of cementitious compositions, characterized by the use of a fluidifier consisting of said starch sulphate.

### Detailed description of the invention

The applicant has observed experimentally that not all the compounds obtained by sulphation of starch are effective as cement fluidifiers, as would appear from the prior art.

In particular, the applicant has found that the molecular weight and sulphur content have a determining importance for the cement fluidifying effect of starch sulphate, as well as for the reduction of the content of air entrained in fluidified compositions.

The applicant hence describes a cement fluidifier consisting of starch sulphate and/or its hydrolysed salts, where the starch sulphate is characterized by a specific sulphur content and a specific molecular weight.

The starch sulphates according to the invention have a molecular weight (MW) of between 3,000 and 50,000. Preferably, the molecular weight is of between 3,000 and 18,000, more preferably of between 5,000 and 16,000, and still more preferably of between 8,500 and 14,000.

The sulphur percentage ranges from 6% to 12%, preferably from 6.5% to 12%, more preferably from 6.5% to 10%, and even more preferably, from 7% to 9%.

The starches having a sulphur percentage of between 6.5% and 10% and a molecular weight of between 5,000 and 16,000 have a superfluidifying activity.

In the context of the present invention, by starch is meant a polysaccharide consisting of units of D-(+)-glucose bound to one another by α-glucoside bonds, both α(1-4) bonds, typical of amylose, and α(1-6) bonds, characteristic of amylopectin.

The fluidifiers that are the subject of the present invention include, in addition to starch as such, also its product of partial hydrolysis, provided that these have molecular weights and sulphur contents falling within the ranges referred to above.

A preferred example of these products are dextrins.

By starch sulphate is meant any compound of starch where one or more hydroxyls of the glucoside residues are present in the form of esters with sulphuric acid. The sulphate group may be present in the undissociated form, or else as an anion in the salified form, for example, with alkaline metals, such as sodium or potassium, with alkaline-earth metals, such as calcium or magnesium, with organic amines, or with quaternary ammonium groups.

The terms 'sulphur percentage' or 'sulphur content' indicate the percentage incidence of the weight of the atoms of sulphur with respect to the weight of the polysaccharide.

The term 'molecular weight' indicates specifically and limitedly the so-called 'weighted average molecular weight' of the polysaccharide, also denoted as MW.

The starch sulphates according to the invention are prepared from starch by means of a sulphation reaction, which may be conducted in homogeneous or heterogeneous systems, aqueous or non-aqueous systems, or in the solid state.

Preferably, the reaction is conducted in homogeneous or heterogeneous non-aqueous systems, using chlorosulphonic acid or formamide according to processes known to the state of the art (F. Schierbaum and K. Kordel, Carbohydrate Sulfates, ACS Symposium, series No. 77, 1978, Ed. R.G. Schweiger, pp. 173-192).

This reaction is preferred in so far as it enables a greater control over the degree of sulphation of the products.

Alternatively, it may be performed using other sulphating agents, such as piperidine sulphuric acid, a pyridine and sulphur trioxide complex, sulphuric acid, and sulphur trioxide according to methodologies that are known to the state of the art.

Examples of obtaining starch sulphates having a molecular weight and sulphur content in accordance with the present invention are cited in the experimental part.

A further aspect of the invention regards cementitious compositions having high fluidity and reduced air entrapping in the fluid state, characterized by their starch sulphate content having a molecular weight and sulphur percentage within the ranges referred to above. Examples of such compositions are cements, cementitious mortars, concretes, conglomerates and mixtures of various nature.

By cement is meant any mixture of limestone, silicates and aluminates, such as Portland cement, consisting of a mixture of alumino-silicates, calcium complexes and an excess of limestone. Further components of the cement may be reactive products, such as fly ash and/or residue from blast furnaces and the like, as well as cement additives, such as accelerators, retarders, aeration regulators, polymer-modified systems, corrosion reducers, alkali-aggregate expansion reducers, multipurpose additives, possible additional fluidifiers and/or superfluidifiers, etc.

By cementitious mortar is meant any mixture of cement with water and mineral agglomerates of various grain size, e.g., sand.

The starch sulphate is added to the cementitious compositions in the proportions currently used for fluidifiers/ superfluidifiers. These proportions may range from 0.05% to 4% with respect to the weight of the cement, with a preferential range of between 0,1% and 3%, or more preferably of between 0.2% and 1.5%, typically, 0.4%.

The starch sulphate may be added to the cementitious compositions according to any of the possible methods, either in the dry phase or in the aqueous phase. In the dry phase, it may be incorporated and mixed with the already prepared cement, or premixed with some of the components of the cement (the components that are lacking being added subsequently) or else simply added to the mixture during preparation of the cement.

Alternatively, it is possible to work in the aqueous phase by adding starch sulphate (or its aqueous solutions) to the cementitious mortar, whether this is ready or in the stage of formation.

According to a preferred embodiment, the procedure is to prepare a solution of the fluidifier in the mixing water and to add to it the other components; for example, fluidified cementitious mortars are obtained by adding cement and sand to a solution, which has previously been prepared, of starch sulphate in the mixing water.

A further subject of the present invention is a process for preparing a hardenable cementitious composition by using starch sulphate or its hydrolysed derivatives, or their respective salts, or their mixtures, where the starch sulphate or its hydrolysed derivatives have a sulphur content and molecular weight within the ranges referred to above, and by mixing it with appropriate components and additives of cementitious compositions. The starch sulphate is added according to the quantities and procedures described above.

The present invention moreover comprises a process for increasing the fluidity of cementitious compositions, and/or for reducing the amount of water needed to obtain workable mixtures starting from such compositions, and/or for reducing the trapping of air in fluid cementitious mixtures, characterized by the addition of a starch sulphate having a molecular weight and sulphur content within the ranges referred to above. The starch sulphate is added according to the quantities and procedures described above.

The effects obtained vary from those of a fluidifier to those of a superfluidifier according to the degree of substitution and the molecular weights chosen, as described in detail in the foregoing paragraphs. The values of fluidity and air entrapping of cementitious mortars obtained from using starch sulphates according to the present invention are presented in the experimental part (see Table 1).

The examples presented in the sequel in the experimental part further describe the invention that is the subject of the present patent application, without these examples, however, having any limiting effect.

### EXPERIMENTAL PART

### A. Preparation of starch sulphates

### Example 1 - Preparation of a superfluidifying agent according to the invention consisting of starch sulphate with a sulphur content (%S) of 7.6%

The reaction is conducted in an inert atmosphere (nitrogen) in a lined glass reactor (capacity, 2 lit) provided with a four-necked cover to which are connected the following pieces of apparatus: stirring rod, dropping funnel, inlet and outlet for flow of inert gas (nitrogen). Forty grams of starch of the "soluble starch" type (Aldrich) having a humidity of 10 wt% are added to 80 ml of formamide under constant mechanical stirring, and the mixture is kept at the temperature of 80°C for 30 minutes. After bringing the temperature down to 15-20°C, 19.5 ml of chlorosulphonic acid are added drop by drop over a period of not less than 2 hours. The temperature is then raised to 65°C, and the reaction is conducted for a period of 3.5 hours. At the end of the reaction, the system is poured into a beaker containing 400 ml of a water/ice mixture. The solution thus obtained is neutralized with solid Ca(OH)₂ and filtered on filter paper. The filtrate is added to three volumes of methanol, and the resulting precipitate is recovered by decantation. The precipitate obtained is further dispersed in 400 mlit of methanol and kept under constant mechanical stirring for 20 minutes at room temperature. The solid is recovered by filtration on filter paper and put in a vacuum oven at 40°C in the presence of phosphoric anhydride. In this way, 49.2 g of starch sulphate are obtained. The chemico-physical characteristics of the starch sulphate obtained as described are the following:
**Molecular weight:** 13,000 dalton
**IR spectrophotometry:** two intense bands may be detected (not present in the spectrum of the original starch), centred at approximately 1250-1220 cm⁻¹ and 820 cm⁻¹ (in the IR spectrophotometric section), which may be attributed to stretching S=O and to symmetrical stretching S-O-C, respectively. These data confirm that sulphation of the hydroxyl residues of the starch has taken place.
^{**13**}**C-NMR spectrometry:** in addition to the typical signals of starch, signals may be detected at approximately 78.0 ppm, 70.5 ppm and 68.5 ppm, which may be attributed to the substitution in the various accessible positions of the glucoside unit, and mainly in position C6.
**Ultimate analysis:** this analysis has detected a sulphur content of 7.6% w/w.

### Example 2 - Preparation of a superfluidifying agent according to the invention consisting of starch sulphate with a sulphur content (%S) of 8.3%

The reaction is conducted in an inert atmosphere (nitrogen) in the reactor described in Example 1.

Forty grams of starch of the "soluble starch" type (Aldrich) having a humidity of 10 wt% are added to 80 ml of formamide under constant mechanical stirring, and the mixture is kept at the temperature of 80°C for 30 minutes. After bringing the temperature down to 15-20°C, 19.5 ml of chlorosulphonic acid are added drop by drop over a period of not less than 2 hours. The temperature is then raised to 85°C, and the reaction is conducted for a period of 3.5 hours. At the end of the reaction, the system is poured into a beaker containing 400 ml of a water/ice mixture. The solution thus obtained is neutralized with solid Ca(OH)₂ and filtered on filter paper. The filtrate is added to three volumes of methanol, and the resulting precipitate is recovered by decantation. The precipitate obtained is further dispersed in 400 ml of methanol and kept under constant mechanical stirring for 20 minutes at room temperature. The solid is recovered by filtration on filter paper and put in a vacuum oven at 40°C in the presence of phosphoric anhydride. In this way, 48.7 g of starch sulphate are obtained.

The chemico-physical characteristics of the starch sulphate obtained as described are the following:
**Molecular weight:** 11,000 dalton
**IR spectrophotometry:** two intense bands may be detected not present in the spectrum of the original starch), centred at approximately 1250-1220 cm⁻¹ and 820 cm⁻¹, which may be attributed to stretching S=O and to symmetrical stretching S-O-C, respectively. These data confirm that sulphation of the hydroxyl residues of the starch has taken place.
^{**13**}**C-NMR spectrometry:** in addition to the typical signals of starch, signals may be detected at approximately 78.0 ppm, 70.5 ppm and 68.5 ppm which may be attributed to the substitution in the various accessible positions of the glucoside unit, and mainly in position C6.
**Ultimate analysis:** this analysis has detected a sulphur content of 8.3% w/w.

### Example 3 - Preparation of a superfluidifying agent according to the invention consisting of dextrin sulphate with a sulphur content (%S) of 8.5%

The reaction is conducted in an inert atmosphere (nitrogen) in the reactor described in Example 1.

Forty grams of dextrin of the "Dextrin 10" type (Fluka) are added to 80 ml of formamide under constant mechanical stirring, and the mixture is kept at the temperature of 80°C for 30 minutes. After bringing the temperature down to 15-20°C, 19.5 ml of chlorosulphonic acid are added drop by drop over a period of 1.5 hours. The temperature is then raised to 50°C, and the reaction is conducted for a period of 3.5 hours. At the end of the reaction, the system is poured into a beaker containing 400 ml of a water/ice mixture. The solution thus obtained is neutralized with solid Ca(OH)₂ and filtered on filter paper. The filtrate is added to three volumes of methanol, and the resulting precipitate is recovered by decantation. The precipitate obtained is further dispersed in 400 ml of methanol and kept under constant mechanical stirring for 20 minutes at room temperature. The solid is recovered by filtration on filter paper and put in a vacuum oven at 40°C in the presence of phosphoric anhydride. In this way, 34.9 g of dextrin sulphate are obtained. The chemico-physical characteristics of the dextrin sulphate obtained as described are the following:
**Molecular weight:** 12,000 dalton
**IR spectrophotometry:** two intense bands may be detected not present in the spectrum of the original starch), centred at approximately 1250-1220 cm⁻¹ and 820 cm⁻¹, which may be attributed to stretching S=O and to symmetrical stretching S-O-C, respectively. These data confirm that sulphation of the hydroxyl residues of the starch has taken place.
^{**13**}**C-NMR spectrometry:** in addition to the typical signals of dextrin, signals may be detected at approximately 78.0 ppm, 70.5 ppm and 68.5 ppm which may be attributed to the substitution in the various accessible positions of the glucoside unit, and mainly in position C6.
**Ultimate analysis:** this analysis has detected a sulphur content of 8.5% w/w.

### Example 4 (comparative) - Preparation of an agent consisting of starch sulphate with a sulphur content (%S) of 12.5%

The reaction is conducted in an inert atmosphere (nitrogen) in the reactor described in Example 1.

A quantity of 40.1 grams of starch of the "soluble starch" type (Aldrich) having a humidity of 10 wt% are added to 120 ml of formamide under constant mechanical stirring, and the mixture is kept at the temperature of 80°C for 30 minutes. After bringing the temperature down to 15-20°C, 40 ml of chlorosulphonic acid are added drop by drop over a period of 1.5 hours. The temperature is then raised to 50°C, and 5 ml of chlorosulphonic acid are added drop by drop in 15 minutes; finally, the temperature is brought up to 65°C, and the reaction is conducted for a period of 2 hours. At the end of the reaction, the system is poured into a beaker containing 400 ml of a water/ice mixture. The solution thus obtained is neutralized with solid Ca(OH)₂ and filtered on filter paper. The filtrate is added to three volumes of methanol, and the resulting precipitate is recovered by decantation. The precipitate obtained is further dispersed in 400 ml of methanol and kept under constant mechanical stirring for 20 minutes at room temperature. The solid is recovered by filtration on filter paper and put in a vacuum oven at 40°C in the presence of phosphoric anhydride. In this way, 88.4 g of starch sulphate are obtained.
The chemico-physical characteristics of the starch sulphate obtained as described are the following:
**Molecular weight:** 11,000 dalton
**IR spectrophotometry:** two intense bands may be detected (not present in the spectrum of the original starch), centred at approximately 1250-1220 cm⁻¹ and 820 cm⁻¹, which may be attributed to stretching S=O and to symmetrical stretching S-O-C, respectively. These data confirm that sulphation of the hydroxyl residues of the starch has taken place.
^{**13**}**C-NMR spectrometry:** in addition to the typical signals of starch, signals may be detected at approximately 78.0 ppm, 70.5 ppm and 68.5 ppm which may be attributed to the substitution in the various accessible positions of the glucoside unit, and mainly in position C6.
**Ultimate analysis:** this analysis has detected a sulphur content of 12.5% w/w.

### Example 5 - Preparation of a fluidifying agent according to the invention consisting of starch sulphate with a sulphur content (%S) of 6.4%

The reaction is conducted in an inert atmosphere (nitrogen) in the reactor described in Example 1.

Forty grams of starch of the "soluble starch" type (Aldrich) having a humidity of 10 wt% are added to 120 ml of formamide under constant mechanical stirring, and the mixture is kept at the temperature of 80°C for 30 minutes. After bringing the temperature down to 15-20°C, 45 mlit of chlorosulphonic acid are added drop by drop over a period of not less than 2 hours. The temperature is then raised to 85°C, and the reaction is conducted for a period of 2 hours. At the end of the reaction, the system is poured into a beaker containing 400 ml of a water/ice mixture. The solution thus obtained is neutralized with solid Ca(OH)₂ and filtered on filter paper. The filtrate is added to three volumes of methanol, and the resulting precipitate is recovered by decantation. The precipitate obtained is further dispersed in 400 ml of methanol and kept under constant mechanical stirring for 20 minutes at room temperature. The solid is recovered by filtration on filter paper and put in a vacuum oven at 40°C in the presence of phosphoric anhydride. In this way, 85.3 g of starch sulphate are obtained.

The chemico-physical characteristics of the starch sulphate obtained as described are the following:
**Molecular weight:** 5,450 dalton
**IR spectrophotometry:** two intense bands may be detected (not present in the spectrum of the original starch), centred at approximately 1250-1220 cm⁻¹ and 820 cm⁻¹, which may be attributed to stretching S=O and to symmetrical stretching S-O-C, respectively. These data confirm that sulphation of the hydroxyl residues of the starch has taken place.
^{**13**}**C-NMR spectrometry:** in addition to the typical signals of starch, signals may be detected at approximately 78.0 ppm, 70.5 ppm and 68.5 ppm which may be attributed to the substitution in the various accessible positions of the glucoside unit, and mainly in position C6.
**Ultimate analysis:** this analysis has detected a sulphur content of 6.4% w/w.

### Example 6 (comparative) - Preparation of starch sulphate with a sulphur content (%S) of 5.7% salified with sodium

The reaction is conducted in an inert atmosphere (nitrogen) in the reactor described in Example 1.

Twenty grams of starch of the "soluble starch" type (Aldrich) having a humidity of 10 wt% are added to 70 ml of formaldehyde under constant mechanical stirring, and the mixture is kept at the temperature of 5°C for 15 minutes. To this mixture are added drop by drop 40.4 ml of a 70% solution of SO₃ in tetrachloroethane over a period of 45 minutes. After bringing the temperature up to 50°C, the reaction is conducted for a period of 5 hours. At the end of the reaction, the system is poured into a beaker containing 350 ml of ethanol. The resultant precipitate is recovered by filtration on filter paper and dissolved in 150 ml of water, and the solution thus obtained is neutralized with NaOH 4 N. The solution is then added to 3 volumes of methanol, and the resultant precipitate is recovered by filtration and put in a vacuum oven at 40°C in the presence of phosphoric anhydride. In this way, 23.4 g of starch sulphate are obtained salified with sodium. The chemico-physical characteristics of the starch sulphate obtained as described are the following:
**Molecular weight:** 33,700 dalton
**IR spectrophotometry:** two intense bands may be detected (not present in the spectrum of the original starch), centred at approximately 1250-1220 cm⁻¹ and 820 cm⁻¹, which may be attributed to stretching S=O and to symmetrical stretching S-O-C, respectively. These data confirm that sulphation of the hydroxyl residues of the starch has taken place.
^{**13**}**C-NMR spectrometry:** in addition to the typical signals of starch, signals may be detected at approximately 78.0 ppm, 70.5 ppm and 68.5 ppm which may be attributed to the substitution in the various accessible positions of the glucoside unit, and mainly in position C6.
**Ultimate analysis:** this analysis has detected a sulphur content of 5.7% w/w.

Using the procedure described in the previous examples, further starch sulphates were obtained (Examples 7-12) having the following characteristics:
Example 7: MW 9,545 %S 8.7
Example 8: MW 10,700 %S 6.5
Example 9: MW 17,650 %S 11.2
Example 10: MW 18,000 %S 11.7
Example 11 (comparative): MW 3,000 %S 8
Example 12 (comparative): MW 12,000 %S 5.9

### B. Measurement of fluidifying effect and air entrapping

A standard mortar was prepared as reference. The preparation procedure followed (mixing of ingredients, filling of moulds, compacting, curing) was in accordance with the requirements of Standard UNI-EN 196, Part 1.

The mortar as such was used as control. The same mortar was also prepared with the addition of starch sulphates having different molecular weights and sulphur contents (Examples 1-12), or with the addition of the known fluidifier CR-100 (β-naphthalene sulphonate condensed with formaldehyde).

The fluidity of the mortars obtained was measured on the basis of the spreading data, as specified by Standard UNI 7044. A spreading value higher than that of the standard mortar indicated a fluidifying effect.

Entrapping of air was assessed on the basis of the absolute density of the cementitious mortars. The determination was made in accordance with the procedures commonly applied in the cement field. In particular, a container having a capacity of 1l was used. The container was filled with mortar in two layers (each of a height equal to one half the height of the container), compacted with 15 strokes applied with a steel pestle. The excess mortar was then scraped away using a strike-off board, and the surface of the mortar was smoothed off. Finally, everything was weighed and the tare deducted from the total weight. The net weight of the mortar enabled calculation of the absolute density of the conglomerate.

A higher absolute density indicated a lower entrapping of air.

### C. Fluidifying effect of starch sulphates

The fluidifying effect was measured according to the procedure described under Point B. The results are given in Table 1.

**TABLE 1**

| SAMPLE | | | %S | MW | SPREADING % | ABSOLUTE DENSITY |
|---|---|---|---|---|---|---|
| Without additive | | | | | 48 | 2300 |
| CR-100 | | | | | 80 | 2245 |
| EXAMPLE | 1 | | 7.6 | 13,00 0 | 85 | 2295 |
| " | 2 | | 8.3 | 11,00 0 | 110 | 2300 |
| " | 3 | | 8.5 | 12,00 0 | 130 | 2315 |
| " | 4 | COMPARATIVE | 12.5 | 11,00 0 | 35 | 2270 |
| " | 5 | | 6.4 | 5,450 | 65 | 2275 |
| " | 6 | COMPARATIVE | 5.7 | 33,70 0 | 40 | 2315 |
| " | 7 | | 8.7 | 9,545 | 105 | 2340 |
| " | 8 | | 6.5 | 10,70 0 | 85 | 2320 |
| " | 9 | | 11.2 | 17,65 0 | 65 | 2310 |
| " | 10 | | 11.7 | 18,00 0 | 65 | 2300 |
| " | 11 | COMPARATIVE | 8.0 | 3,000 | 55 | 2330 |
| " | 12 | COMPARATIVE | 5.9 | 12,00 0 | 30 | 2290 |

From the data tabulated above, it may be noted that the fluidifiers according to the present invention (Examples 1, 2, 3, 5, 7-10) present spreading values even beyond 60% higher than those obtained with the fluidifier CR-100, and even beyond two and a half times higher than those of non-fluidified mortars.

These data show that the compounds according to the present invention may be advantageously used as superfluidifiers in cementitious compositions with an effectiveness unexpectedly higher than that of traditional superfluidifiers,

The comparison between Example 7 and Example 11 (comparative) shows that, with molecules having a comparable sulphur content, the fluidifying activity is even doubled as the molecular weight passes from 3,000 dalton to 9,545 dalton.

Likewise, when Example 2 is compared with Example 4 (comparative), it is noted that, given the same molecular weight, the fluidifying activity increases from 35 to 110% as the sulphur percentage varies from 12.5% to 8.3%.

The data set out in Table 1 moreover show that not all starch sulphates have a fluidifying capacity, as is instead generally assumed in the prior art: the starches according to the comparative examples 4, 6, 11, 12, albeit generally falling within the class of starch sulphates, present a fluidity of the same order as the control (product without fluidifier) or lower, corresponding to a zero, or even negative, fluidifying capacity.

### D. Relation between sulphur content and fluidifying effect

Cement/water mixes were made and characterized according to the following procedure:

Ninety grams of cement of the type CEM II/A-L 3,25R produced by Italcementi were put in a 250-ml glass beaker. To this, 30 grams of water were added. The contents of the beaker were mixed manually using a spatula until a homogeneous mixture was obtained (typically, 3 minutes). To the mixture thus obtained were added 360 mg of additive in the form of powder obtained as described in Example 2 (MW = 11,000), but varying the quantity of chlorosulphonic acid in order to obtain products characterized by a sulphur content (determined via ultimate analysis) within the 4-15% range. The mixture was then stirred once more for a further 3 minutes.

An aliquot of the mixture (42 ml) was put in a glass funnel (maximum internal diameter, 75 mm; length of tube, 75 mm; angle of cone, 60°) of the type described in the Techware catalogue of Sigma-Aldrich under code No. Z14,267-7, fixed to a support. Using a second-counter, the rate of flow of the known volume of mixture contained in the funnel was determined. The measurements were repeated 5 times, and the rate of flow, expressed in seconds, was calculated as the mean of the 5 determinations. The rate of flow is inversely proportional to the fluidity of the mixture. Without addition of additive it is not possible to determine the rate of flow, in so far as the mixture is not able to flow through the funnel.

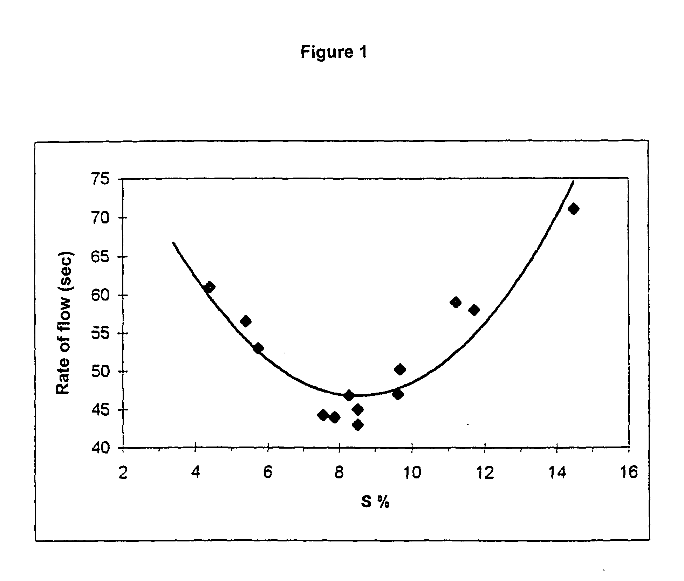

As is clearly shown in Figure 1, where the rate of flow is given as a function of the sulphur content (S%) of the starch sulphate, the pattern is not linear.

Surprisingly, the rate of flow reaches minimum values within a range of S% of between 6.0% and 11.0%. Both below and above these levels of sulphur content, the mixture is progressively less fluid.

These data show that, given the same molecular weight, the fluidifying activity varies according to a non-linear pattern.

The data set out in Figure 1 again show that derivatives having a sulphur content of above or below the range of 6-12% have a low or zero fluidifying capacity.

### E. Effect of fluidifier on air entrapping in fluid mixtures

Table 1 shows that, as compared to the control without fluidifier, the composition fluidified with the traditional fluidifier CR-100 (β-naphthalene sulphonate condensed with formaldehyde) presents a greater entrapping of air. The starch sulphates according to the invention surprisingly show an entrapping of air lower than that given by CR-100, and in the majority of cases even lower than the values obtained for mortars not containing fluidifiers.

These data show that the compounds according to the present invention not only increase in an unexpected way the fluidity of cementitious compositions, but at the same time also reduce the entrapping of air to a higher extent than do known fluidifiers.

## Claims

1. Cement additive consisting of starch sulphate, its hydrolysed derivatives, or their respective salts, or mixtures of these components, **characterized in that** the starch sulphate or its hydrolysed derivatives or salts have a sulphur content of between 6% and 12% and a molecular weight (MW) of between 3,000 and 50,000.

2. Cement additive according to Claim 1, where the starch sulphate or its hydrolysed derivatives or salts have a sulphur content of between 6.5% and 12% and a molecular weight (MW) of between 3,000 and 18,000.

3. Cement additive according to Claim 1, where the starch sulphate or its hydrolysed derivatives or salts have a sulphur content of between 6.5% and 10% and a molecular weight (MW) of between 5,000 and 14,000.

4. Cement additive according to Claim 1, where the starch sulphate or its hydrolysed derivatives or salts have a sulphur content of between 7% and 9% and a molecular weight (MW) of between 8,500 and 14,000.

5. Cementitious composition containing starch sulphate, or its hydrolysed derivatives, or their respective salts, or mixtures of these components, possibly with the addition of further suitable cement additives, where the starch sulphate or its hydrolysed derivatives or salts have a sulphur content of between 6% and 12% and a molecular weight (MW) of between 3,000 and 50,000.

6. Cementitious composition according to Claim 5, where the starch sulphate or its hydrolysed derivatives or their salts have a sulphur content of between 6.5% and 12% and a molecular weight (MW) of between 3,000 and 18,000.

7. Cementitious composition according to Claim 5, where the starch sulphate or its hydrolysed derivatives or salts have a sulphur content of between 6.5% and 10% and a molecular weight (MW) of between 5,000 and 14,000.

8. Cementitious composition according to Claim 5, where the starch sulphate or its hydrolysed derivatives or salts have a sulphur content of between 7% and 9% and a molecular weight (MW) of between 8,500 and 14,000.

9. Cementitious composition according to any one of the claims from 5 to 8, in the form of a cement.

10. Cementitious composition according to Claim 9, in the form of a Portland cement.

11. Cementitious composition according to any one of the claims from 5 to 10, with the addition of water and suitable mineral aggregates, in the form of a mortar or a fluid cementitious mixture.

12. Cementitious composition according to any one of the claims from 5 to 11, where the starch sulphate or its hydrolysed derivatives or salts are contained in a weight percentage of between 0.05 and 4 wt% with respect to the weight of the cement.

13. Cementitious composition according to any one of the claims from 5 to 11, where the starch sulphate or its hydrolysed derivatives or salts are contained in a weight percentage of between 0.2 and 1.5 wt% with respect to the weight of the cement.

14. Process for increasing the fluidity of a cementitious composition, and/or reducing air entrapping in a cementitious composition, **characterized in that** to the composition are added starch sulphate or its hydrolysed derivatives, or their respective salts, or their mixtures, where the starch sulphate, or its hydrolysed derivatives have a sulphur content of between 6% and 12% and a molecular weight (MW) of between 3,000 and 50,000.

15. Process according to Claim 14, where the starch sulphate or its hydrolysed derivatives or their salts have a sulphur content of between 6.5% and 12% and a molecular weight (MW) of between 3,000 and 18,000.

16. Process according to Claim 14, where the starch sulphate or its hydrolysed derivatives or salts have a sulphur content of between 6.5% and 10% and a molecular weight (MW) of between 5,000 and 14,000.

17. Process according to Claim 14, where the starch sulphate or its hydrolysed derivatives or salts have a sulphur content of between 7% and 9% and a molecular weight (MW) of between 8,500 and 14,000.

18. Process according to any one of the claims from 14 to 17, where the starch sulphate or its hydrolysed derivatives or salts are added in a weight percentage of between 0.05 and 4 wt% with respect to the weight of the cement.

19. Process according to any one of the claims from 14 to 17, where the starch sulphate or its hydrolysed derivatives or salts are added in a weight percentage of between 0.2 and 1.5 wt% with respect to the weight of the cement.

20. Process for the preparation of a high-fluidity and/or low air-entrapping cementitious composition, **characterized in that** with suitable components and additives of cementitious compositions are mixed starch sulphate or its hydrolysed derivatives, or their respective salts, or their mixtures, where the starch sulphate or its hydrolysed derivatives have a sulphur content of between 6% and 12% and a molecular weight (MW) of between 3,000 and 50,000.

21. Process according to Claim 20, where the starch sulphate or its hydrolysed derivatives or their salts have a sulphur content of between 6.5% and 12% and a molecular weight (MW) of between 3,000 and 18,000.

22. Process according to Claim 20, where the starch sulphate or its hydrolysed derivatives or salts have a sulphur content of between 6.5% and 10% and a molecular weight (MW) of between 5,000 and 14,000.

23. Process according to Claim 20, where the starch sulphate or its hydrolysed derivatives or salts have a sulphur content of between 7% and 9% and a molecular weight (MW) of between 8,500 and 14,000.

24. Process according to any one of the claims 20-23, where the starch sulphate or its hydrolised derivatives or salts are added in a weight percentage comprised between 0.05% and 4% with respect to the weight of the cement.

25. Process according to any one of the claims 20-23, where the starch sulphate or its hydrolised derivatives or salts are added in a weight percentage comprised between 0.2% and 1.5% with respect to the weight of the cement.

## Patentansprüche

1. Zementadditiv, bestehend aus Stärkesulfat, seinen hydrolysierten Derivaten, oder deren jeweiligen Salzen oder Mischungen dieser Komponenten, **dadurch gekennzeichnet, daß** das Stärkesulfat oder seine hydrolysierten Derivate oder Salze einen Schwefelgehalt von zwischen 6 % und 12 % und ein Molekulargewicht (MW) von zwischen 3.000 und 50.000 aufweist bzw. aufweisen.

2. Zementadditiv nach Anspruch 1, **dadurch gekennzeichnet, daß** das Stärkesulfat oder seine hydrolysierten Derivate oder Salze einen Schwefelgehalt von zwischen 6,5 % und 12 % und ein Molekulargewicht (MW) von zwischen 3.000 und 18.000 aufweist bzw. aufweisen.

3. Zementadditiv nach Anspruch 1, **dadurch gekennzeichnet, daß** das Stärkesulfat oder seine hydrolysierten Derivate oder Salze einen Schwefelgehalt von zwischen 6,5 % und 10 % und ein Molekulargewicht (MW) von zwischen 5.000 und 14.000 aufweist bzw. aufweisen.

4. Zementadditiv nach Anspruch 1, **dadurch gekennzeichnet, daß** das Stärkesulfat oder seine hydrolysierten Derivate oder Salze einen Schwefelgehalt von zwischen 7 % und 9 % und ein Molekulargewicht (MW) von zwischen 8.500 und 14.000 aufweist bzw. aufweisen.

5. Zementartige Zusammensetzung, enthaltend Stärkesulfat, oder seine hydrolysierten Derivate, oder deren jeweiligen Salze, oder Mischungen dieser Komponenten, möglich mit dem Zusatz eines weiteren geeigneten Zementadditivs, **dadurch gekennzeichnet, daß** das Stärkesulfat oder seine hydrolysierten Derivate oder Salze einen Schwefelgehalt von zwischen 6 % und 12 % und ein Molekulargewicht (MW) von zwischen 3.000 und 50.000 aufweist bzw. aufweisen.

6. Zementartige Zusammensetzung nach Anspruch 5, **dadurch gekennzeichnet, daß** das Stärkesulfat oder seine hydrolysierten Derivate oder deren Salze einen Schwefelgehalt von zwischen 6,5 % und 12 % und ein Molekulargewicht (MW) von zwischen 3.000 und 18.000 aufweist bzw. aufweisen.

7. Zementartige Zusammensetzung nach Anspruch 5, **dadurch gekennzeichnet, daß** das Stärkesulfat oder seine hydrolysierten Derivate oder Salze einen Schwefelgehalt von zwischen 6,5 % und 10 % und ein Molekulargewicht (MW) von zwischen 5.000 und 14.000 aufweist bzw. aufweisen.

8. Zementartige Zusammensetzung nach Anspruch 5, **dadurch gekennzeichnet, daß** das Stärkesulfat oder seine hydrolysierten Derivate oder Salze einen Schwefelgehalt von zwischen 7 % und 9 % und ein Molekulargewicht (MW) von zwischen 8.500 und 14.000 aufweist bzw. aufweisen.

9. Zementartige Zusammensetzung nach einem der Ansprüche 5 bis 8, in der Form eines Zements.

10. Zementhaltige Zusammensetzung nach Anspruch 9, in der Form eines Portland-Zements.

11. Zementartige Zusammensetzung nach einem der Ansprüche 5 bis 10, mit dem Zusatz von Wasser und geeigneten Mineralaggregaten, in der Form eines Mörtels oder einer fluiden zementartigen Mischung.

12. Zementartige Zusammensetzung nach einem der Ansprüche 5 bis 11, **dadurch gekennzeichnet, daß** das Stärkesulfat oder seine hydrolysierten Derivate oder Salze in Gewichtsprozenten von zwischen 0,05 und 4 Gew.-% in bezug auf das Gewicht des Zements enthalten ist bzw. sind.

13. Zementartige Zusammensetzung nach einem der Ansprüche 5 bis 11, **dadurch gekennzeichnet, daß** das Stärkesulfat oder seine hydrolysierten Derivate oder Salze in Gewichtsprozenten von zwischen 0,2 und 1,5 Gew.-% in bezug auf das Gewicht des Zements enthalten ist bzw. sind.

14. Verfahren zum Steigern der Fluidität einer zementartigen Zusammensetzung, und/oder zum Reduzieren eines Lufteinschlusses in einer zementartigen Zusammensetzung, **dadurch gekennzeichnet, daß** zu der Zusammensetzung Stärkesulfat oder seine hydrolysierten Derivate, oder deren jeweiligen Salze, oder deren Mischungen zugefügt wird bzw. werden, wobei das Stärkesulfat oder seine hydrolysierten Derivate einen Schwefelgehalt von zwischen 6 % und 12 % und ein Molekulargewicht (MW) von zwischen 3.000 und 50.000 aufweist bzw. aufweisen.

15. Verfahren nach Anspruch 14, **dadurch gekennzeichnet, daß** das Stärkesulfat oder seine hydrolysierten Derivate oder deren Salze einen Schwefelgehalt von zwischen 6,5 % und 12 % und ein Molekulargewicht (MW) von zwischen 3.000 und 18.000 aufweist bzw. aufweisen.

16. Verfahren nach Anspruch 14, **dadurch gekennzeichnet, daß** das Stärkesulfat oder seine hydrolysierten Derivate oder Salze einen Schwefelgehalt von zwischen 6,5 % und 10 % und ein Molekulargewicht (MW) von zwischen 5.000 und 14.000 aufweist bzw. aufweisen.

17. Verfahren nach Anspruch 14, **dadurch gekennzeichnet, daß** das Stärkesulfat oder seine hydrolysierten Derivate oder Salze einen Schwefelgehalt von zwischen 7 % und 9 % und ein Molekulargewicht (MW) von zwischen 8.500 und 14.000 aufweist bzw. aufweisen.

18. Verfahren nach einem der Ansprüche 14 bis 17, **dadurch gekennzeichnet, daß** das Stärkesulfat oder seine hydrolysierten Derivate oder Salze in Gewichtsprozenten von zwischen 0,05 und 4 Gew.-% in bezug auf das Gewicht des Zements zugefügt wird bzw. werden.

19. Verfahren nach einem der Ansprüche 14 bis 17, **dadurch gekennzeichnet, daß** das Stärkesulfat oder seine hydrolysierten Derivate oder Salze in Gewichtsprozenten von zwischen 0,2 und 1,5 Gew.-% in bezug auf das Gewicht des Zements zugefügt wird bzw. werden.

20. Verfahren für die Herstellung einer hoch-fluiden und/oder geringen lufteinschließenden zementartigen Zusammensetzung, **dadurch gekennzeichnet, daß** mit geeigneten Komponenten und Additiven von zementartigen Zusammensetzungen Stärkesulfat oder seine hydrolysierten Derivate, oder deren jeweiligen Salze, oder deren Mischungen gemischt werden, wobei das Stärkesulfat oder seine hydrolyiserten Derivate einen Schwefelgehalt von zwischen 6 % und 12 % und ein Molekulargewicht (MW) von zwischen 3.000 und 50.000 aufweist bzw. aufweisen.

21. Verfahren nach Anspruch 20, **dadurch gekennzeichnet, daß** das Stärkesulfat oder seine hydrolysierten Derivate oder deren Salze einen Schwefelgehalt von zwischen 6,5 % und 12 % und ein Molekulargewicht (MW) von zwischen 3.000 und 18.000 aufweist bzw. aufweisen.

22. Verfahren nach Anspruch 20, **dadurch gekennzeichnet, daß** das Stärkesulfat oder seine hydrolysierten Derivate oder Salze einen Schwefelgehalt von zwischen 6,5 % und 10 % und ein Molekulargewicht (MW) von zwischen 5.000 und 14.000 aufweist bzw. aufweisen.

23. Verfahren nach Anspruch 20, **dadurch gekennzeichnet, daß** das Stärkesulfat oder seine hydrolysierten Derivate oder Salze einen Schwefelgehalt von zwischen 7 % und 9 % und ein Molekulargewicht (MW) von zwischen 8.500 und 14.000 aufweist bzw. aufweisen.

24. Verfahren nach einem der Ansprüche 20 bis 23, **dadurch gekennzeichnet, daß** das Stärkesulfat oder seine hydrolysierten Derivate oder Salze in Gewichtsprozenten, umfassend zwischen 0,05 % und 4 % in bezug auf das Gewicht des Zements, zugefügt wird bzw. werden.

25. Verfahren nach einem der Ansprüche 20 bis 23, **dadurch gekennzeichnet, daß** das Stärkesulfat oder seine hydrolysierten Derivate oder Salze in Gewichtsprozenten, umfassend zwischen 0,2 % und 1,5 % in bezug auf das Gewicht des Zements, zugeführt bzw. werden.

## Revendications

1. Additifs de ciment constitués de sulfate d'amidon, ses dérivés hydrolysés ou les sels correspondants, ou des mélanges de ces composants, **caractérisés en ce que** le sulfate d'amidon ou ses dérivés hydrolysés ou sels ont une teneur en soufre située entre 6 % et 12 % et une masse moléculaire (MM) située entre 3 000 et 50 000.

2. Additif de ciment selon la revendication 1 où le sulfate d'amidon ou ses dérivés hydrolysés ou sels ont une teneur en soufre située entre 6,5 % et 12 % et une masse moléculaire (MM) située entre 3 000 et 18 000.

3. Additif de ciment selon la revendication 1 où le sulfate d'amidon ou ses dérivés hydrolysés ou sels ont une teneur en soufre située entre 6,5 % et 10 % et une masse moléculaire (MM) située entre 5 000 et 14 000.

4. Additif de ciment selon la revendication 1 où le sulfate d'amidon ou ses dérivés hydrolysés ou sels ont une teneur en soufre située entre 7 % et 9 % et une masse moléculaire (MM) située entre 8 500 et 14 000.

5. Composition de ciment contenant du sulfate d'amidon ou ses dérivés hydrolysés ou sels ou des mélanges de ces composants éventuellement en addition d'autres additifs de ciment appropriés, où le sulfate d'amidon ou ses dérivés hydrolysés ou sels ont une teneur en soufre située entre 6 % et 12 % et une masse moléculaire (MM) située entre 3 000 et 50 000.

6. Composition de ciment selon la revendication 5, où le sulfate d'amidon ou ses dérivés hydrolysés ou sels ont une teneur en soufre située entre 6,5 % et 12 % et une masse moléculaire (MM) située entre 3 000 et 18 000.

7. Composition de ciment selon la revendication 5, où le sulfate d'amidon ou ses dérivés hydrolysés ou sels ont une teneur en soufre située entre 6,5 % et 10 % et une masse moléculaire (MM) située entre 5 000 et 14 000.

8. Composition de ciment selon la revendication 5, où le sulfate d'amidon ou ses dérivés hydrolysés ou sels ont une teneur en soufre située entre 7 % et 9 % et une masse moléculaire (MM) située entre 8 500 et 14 000.

9. Composition de ciment selon l'une des revendications 5 à 8, sous forme de ciment.

10. Composé de ciment selon la revendication 9, sous forme de ciment Portland.

11. Composé de ciment selon l'une des revendications 5 à 10, avec addition d'eau et d'agrégat minéral approprié, sous forme de mortier ou de mélange de ciment fluide.

12. Composé de ciment selon l'une des revendications 5 à 11, où le sulfate d'amidon ou ses dérivés hydrolysés ou sels sont présents dans un pourcentage massique situé entre 0,05 et 4 % massique par rapport à la masse du ciment.

13. Composé de ciment selon l'une des revendications 5 à 11, où le sulfate d'amidon ou ses dérivés hydrolysés sont présents dans un pourcentage massique situé entre 0,2 et 1,5 % massique par rapport à la masse du ciment.

14. Procédé destiné à augmenter la fluidité du composé de ciment et/ou à réduire l'air occlus dans le composé de ciment, **caractérisé en ce que** le sulfate d'amidon, ses dérivés hydrolysés ou les sels correspondants ou ses mélanges sont ajoutés à la composition, où le sulfate d'amidon ou ses dérivés hydrolysés ont une teneur en soufre située entre 6 % et 12 % et une masse moléculaire (MM) située entre 3 000 et 50 000.

15. Procédé selon la revendication 14, où le sulfate d'amidon ou ses dérivés hydrolysés ou sels ont une teneur en soufre située entre 6,5 % et 12 % et une masse moléculaire (MM) située entre 3 000 et 18 000.

16. Procédé selon la revendication 14, où le sulfate d'amidon ou ses dérivés hydrolysés ou sels ont une teneur en soufre située entre 6,5 % et 10 % et une masse moléculaire (MM) située entre 5 000 et 14 000.

17. Procédé selon la revendication 14, où le sulfate d'amidon ou ses dérivés hydrolysés ou sels ont une teneur en soufre située entre 7 % et 9 % et une masse moléculaire (MM) située entre 8 500 et 14 000.

18. Procédé selon l'une des revendications 14 à 17, où le sulfate d'amidon ou ses dérivés hydrolysés ou sels sont ajoutés dans un pourcentage massique situé entre 0,05 et 4 % massique par rapport à la masse du ciment.

19. Procédé selon l'une des revendications 14 à 17, où le sulfate d'amidon ou ses dérivés hydrolysés ou sels sont ajoutés dans un pourcentage massique situé entre 0,2 et 1,5 % massique par rapport à la masse du ciment.

20. Procédé pour la préparation d'une composition de ciment hautement fluide à occlusion d'air faible, **caractérisé en ce que** le sulfate d'amidon, ses dérivés hydrolysés ou les sels correspondants, ou leurs mélanges, sont mélangés aux composants et additifs de compositions de ciment appropriés, où le sulfate d'amidon ou ses dérivés hydrolysés ont une teneur en soufre située entre 6 % et 12 % et une masse moléculaire (MM) située entre 3 000 et 50 000.

21. Procédé selon la revendication 20, où le sulfate d'amidon ou ses dérivés hydrolysés ou sels ont une teneur en soufre située entre 6,5 % et 12 % et une masse moléculaire (MM) située entre 3 000 et 18 000.

22. Procédé selon la revendication 20, où le sulfate d'amidon ou ses dérivés hydrolysés ou sels ont une teneur en soufre située entre 6,5 % et 10 % et une masse moléculaire (MM) située entre 5 000 et 14 000.

23. Procédé selon la revendication 20, où le sulfate d'amidon ou ses dérivés hydrolysés ou sels ont une teneur en soufre située entre 7 % et 9 % et une masse moléculaire (MM) située entre 8 500 et 14 000.

24. Procédé selon l'une des revendications 20-23, où le sulfate d'amidon ou ses dérivés hydrolysés ou sels sont ajoutés dans un pourcentage massique compris entre 0,05 et 4 % massique par rapport à la masse du ciment.

25. Procédé selon l'une des revendications 14 à 17, où le sulfate d'amidon ou ses dérivés hydrolysés ou sels sont ajoutés dans un pourcentage massique compris entre 0,2 et 1,5 % massique par rapport à la masse du ciment.
